# EUROPEAN PATENT SPECIFICATION

(11) **EP 3 950 086 B1**
(45) Date of publication and mention of the grant of the patent: **05.06.2024**
(21) Application number: 20210897.3
(22) Date of filing: 01.12.2020
(51) Int. Cl.: B01D 29/21, B01D 29/56, E04H 4/12

(54) **FOLDED FILTER ELEMENT FILTRATION SYSTEM WITH INCREASED EFFECTIVE FILTRATION AREA**
FILTRATIONSSYSTEM MIT GEFALTETEM FILTERELEMENT MIT ERHÖHTER EFFEKTIVER FILTRATIONSFLÄCHE
SYSTÈME DE FILTRATION D'ÉLÉMENT DE FILTRE PLIÉ PRÉSENTANT UNE MEILLEURE ZONE DE FILTRATION EFFICACE

(30) Priority: 05.08.2020 CN 202021604745 U; 05.08.2020 CN 202010778040
(43) Date of publication of application: 09.02.2022
(73) Proprietor: Tianjin Premium E-Commerce Co., Ltd., Huayuan, Tianjin (CN)
(72) Inventor: LU, Jun, HUAYUAN, TIANJIN (CN)
(74) Representative: Cabinet Chaillot

(56) References cited:
- CN-U- 205 659 566
- US-A- 3 302 796
- US-A- 5 601 717
- US-A1- 2009 200 227

## Description

### TECHNICAL FIELD

The present disclosure relates to the field of filtration, in particular to a folded filter element filtration system with increased effective filtering area.

### BACKGROUND

Filter element is special equipment in the filtration industry. It is purification equipment for purifying the original fluid resource medium. Now the filter element is mainly used in oil, water and other liquid filtration, air filtration and related industries.

The filter element can remove the solid particles in the fluid, so as to protect the normal operation of the equipment and the cleanliness of the fluid. When the fluid enters into the filter element, the impurities in the fluid are blocked, and the filtered clean fluid flows out through the filter element, so as to realize the purification of the fluid to a certain extent. At present, the structure of the filter element commonly used in swimming pools is a single-layer, gear shaped, or folded filter membrane, which has a general filtering effect. Under the action of water pressure, the adjacent toothed filter surfaces fit together to reduce the effective filtering area, so that the flow rate is reduced and the service life is shorten.

Under the action of water pressure, the existing filtering structure has no water flow guiding effect. The water flows through the filter membrane to form an irregular flow direction, and the adjacent toothed filtering surfaces fit together, so that the effective filtering area is reduced, the flow rate is gradually reduced after use, and the service life is also gradually shortened.

The gear shaped filter membrane of the filter element cannot be evenly divided, and the sizes of the tooth clearances are different. Even if the adjacent gear shaped filter membranes of the filter element have been fitted before use, the pressure drop difference in different areas of the filter membrane is large. The smaller the size of the tooth clearance is, the earlier the filter membrane is blocked by solid particles, so that the overall pressure difference of the filter element is further increased. It causes further deformation of the unclogged position (tooth clearance), and even causes the rupture of the paste place between the filter membrane and the end cover, which reduces the flow rate of the filtration system and causes failure of the filtering effect.

CN 205 659 566 U discloses a folded filter element filtration system with an increased effective filtering area according to the preamble of claim 1.

### SUMMARY

According to the above technical problem, a folded filter element filtration system with an increased effective filtering area is provided by the present disclosure according to claim 1, including a body, an water inlet end, a water outlet end and two filter elements, wherein the body is provided with two chambers, an upper side of the body is respectively provided with the water inlet end and the water outlet end, the water inlet end and the water outlet end are respectively installed with an water inlet end cover and a water outlet end cover respectively, and the water inlet end and the water outlet end respectively corresponds to one chamber; the chamber is divided into an inner chamber and an outer chamber, the inner chamber is located at an inner side of the outer chamber, and the filter element is respectively installed in the outer chamber.

The folded filter element is composed of an end cover, a framework, a filter membrane, an outer flow guide mesh, an inner flow guide mesh and an even folded belt; an outer side of the framework is provided with the filter membrane, the framework is a barrel structure with a gap in the middle, a counter of the filter membrane is a ring-shaped barrel folded structure with outer teeth and inner teeth, an inner tooth circle of the filter membrane is installed on the outer side of the framework and evenly distributed teeth on the even folded belt areinserted into a clearance of the outer teeth, a barrel outer side of the framework is fitted with the tooth shaped inner side formed by the filter membrane, and two ends of the framework are respectively bonded with the end covers at both ends of the filter element, an outer contour of the filter membrane is evenly fitted with the outer flow guide mesh according to the tooth shape, an inner contour of the filter membrane is evenly fitted with the inner flow guide mesh, and the outer flow guide mesh is fitted with an outer side of the filter membrane and is folded into the tooth shape with the filter membrane; the even folded belt is installed on an outside of the filter membrane, one surface of the even folded belt is in a planar shape, the other surface is in a strip shape with even tooth shape; the surface with even tooth shape is fitted with the outer teeth of the filter membrane, and the even folded belt is in a ring-shaped and is fitted with the end cover.

Preferably, the even folded belt is respectively located at an upper end, a middle end and a lower end of the filter membrane, and the evenly distributed teeth on the even folded belt is fitted with the outer teeth of the filter membrane, so as to ensure the even distribution of the tooth shape of the filter membrane, and avoid deflection of the tooth shape of the filter membrane under water pressure, so as to ensure the even distribution of the tooth shape of the filter membrane.

Preferably, the outer flow guide mesh is fitted with the outer side of the filter membrane, and is folded into the tooth shape with the filter membrane, so as to maintain a stiffness of the filter membrane and ensure that the filter membrane does not deform under water pressure; water flows into the filter membrane according to the flow guide meshes; pressure at each position of the water inlet of the filter membrane is balanced to stabilize flow rate of the filter element; the outer flow guide mesh is composed of a support network line, a flow guide mesh line and a water flow entering area, wherein the support network line and an axis of the filter element form a certain angle configured to support a reverse flow network line; the flow guide mesh line and the axis of the filter element form a certain angle to fit the support network line; a rectangular area formed by two adjacent flow guide mesh lines is a flow diversion area of the water flow configured for a passage of the water flow, a parallelogram formed by two adjacent flow guide mesh lines and two adjacent support network lines is the water flow entering area configured for a passage of the water flow into the filter membrane.

Preferably, the inner flow guide mesh is fitted with the inner side of the filter membrane and is folded into the tooth shape with the filter membrane; a stiffness of the filter membrane is maintained to ensure that the filter membrane does not deform under water pressure; water flows into the filter membrane according to the flow guide meshes; pressure at each position of the water inlet of the filter membrane is balanced to stabilize flow rate of the filter element; the inner flow guide mesh is composed of a support network line, a flow guide mesh line and a water flow entering area, wherein the support network line and an axis of the filter element form a certain angle to support a reverse flow network line; the flow guide mesh line and the axis of the filter element form a certain angle to fit the support network line; a rectangular area formed by two adjacent flow guide mesh lines is a flow diversion area of the water flow configured for a passage of the water flow, a parallelogram formed by two adjacent flow guide mesh lines and two adjacent support network lines is the water flow entering area configured for a passage of the water flow into the filter membrane.

Preferably, the end cover is a ring-shaped structure.

Preferably, a center axis of the folded filter element coincides with a center axis of the chamber, a channel is arranged at a bottom of the body to communicate with the outer chamber and the inner chamber of the two chambers, one end of the channel is connected to a center of one chamber, which is a primary stage filtering end of the filtering system, and one end of the channel is an outlet end from the primary stage filtration to a last stage filtering end, a central axis position of the other end of the channel deviates from the other chamber, the other chamber is the last stage filtering end provided by filtration, and the other end of the channel is the water inlet end of the last stage filtration.

Preferably, a center of the channel is provided with a ring-shaped central pipe with holes, configured for allowing the water flowing after filtering into the filtering system center and circumferential positioning of the filter element.

Preferably, the water inlet end cover is connected to the primary stage filtering end of the body through thread connection, the water inlet end cover is provided with a water inlet, the water inlet is a columnar structure with a central hole, a central axis of the water inlet and a central axis of the end cover are not on the same axis, and a center of the end cover is provided with a ring-shaped convex stop, wherein the ring-shaped convex stop is configured for compressing the filter element after the end cover is connected to the body, which is used for the axial positioning of the filter element; the water outlet end cover is connected to the last stage filtering end of the body through thread connection, the water outlet end cover is provided with a water outlet, the water outlet is a columnar structure with a central hole, a central axis of the water outlet is on the same axis with the center axis of the end cover, and the central hole of the end cover is the water outlet of the filtering system; the center of the water outlet end cover is provided with a ring-shaped convex stop, configured for compressing the filter element after the end cover is connected to the body, which is used for the axial positioning of the filter element.

The advantageous effects of the present disclosure are as follows: the folded filter element is improved, the contour of the filter membrane of the folded filter element is a ring-shaped barrel structure with outer teeth and inner teeth, the outer contour of the filter membrane is evenly fitted with the outer flow guide meshes according to the tooth shape, the inner contour of the filter membrane is evenly fitted with the inner flow guide meshes according to the tooth shape, and the outer flow guide meshes is fitted with the filter membrane at inner position and folded into teeth with the filter membrane, which has a flow guiding effect on the inlet and outlet of the filtered water, so as to prevent the water flow from flowing into an irregular shape through the filter membrane, thereby improving the fitting of the filtering water and the filter membrane, which makes the filtration more sufficient and virtually improves the service life of the present disclosure. In the present disclosure, the stiffness of the filter membrane is maintained by the inner and outer flow guide meshes, so as to ensure that the filter membrane does not deform under the water pressure. The water flows into the filter membrane according to the flow guide meshes, and the pressure at each position of the water inlet of the filter membrane is balanced, such that the flow rate of the filter element is stabilized. The even folded belt is arranged, and the evenly distributed teeth on the even folded belt fit with the outer teeth of the filter membrane to ensure the even distribution of the tooth shape of the filter membrane, so that the deflection of the tooth shape of the filter membrane will not be generated under the water pressure, to ensure the even distribution of the tooth shape of the filter membrane, and ensure the pressure stability in the membrane filtration area, so as to stabilize the solid particles evenly intercepted on the filter membrane and stabilize the flow rate of the filter membrane. The filter membrane provided by the present disclosure has a barrel shaped gear type filtering structure. Two sides of the filter membrane are respectively compounded with a layer of meshed flow guide mesh. At the root of the end cover and the middle portion of the filter element, the bundling belt fitting with the gear shape of the filter element is respectively installed to keep the tooth shape of the filter element evenly divided.

### BRIEF DESCRIPTION OF THE DRAWINGS

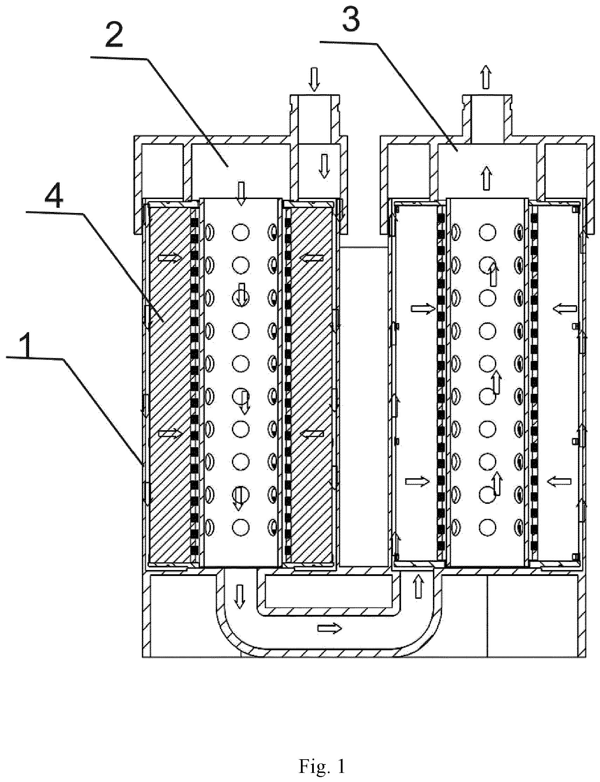

Fig. 1 is a sectional view of the present disclosure.

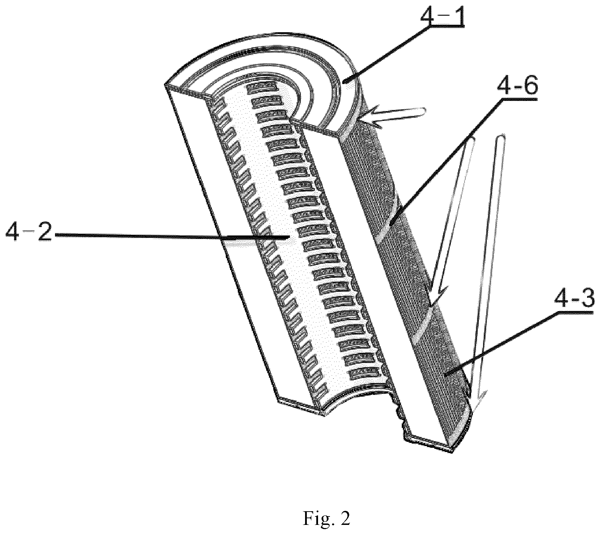

Fig. 2 is a sectional view of the folded filter element of the present disclosure.

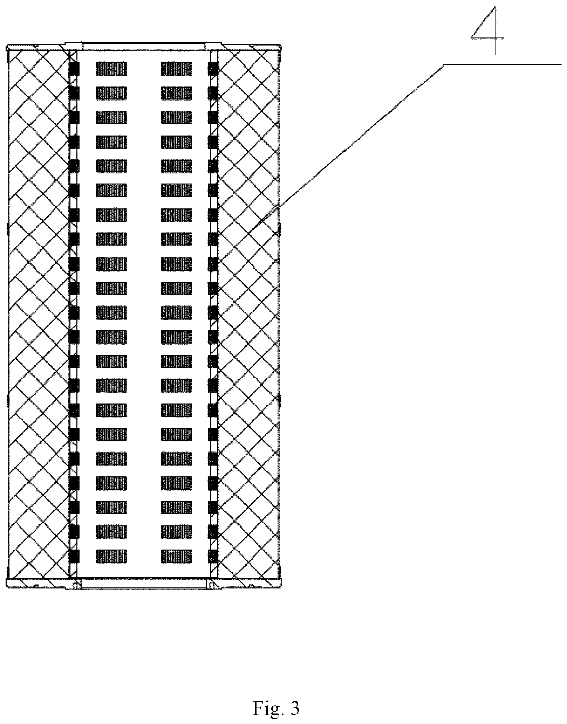

Fig. 3 is a structural view showing of the folded filter element of the disclosure.

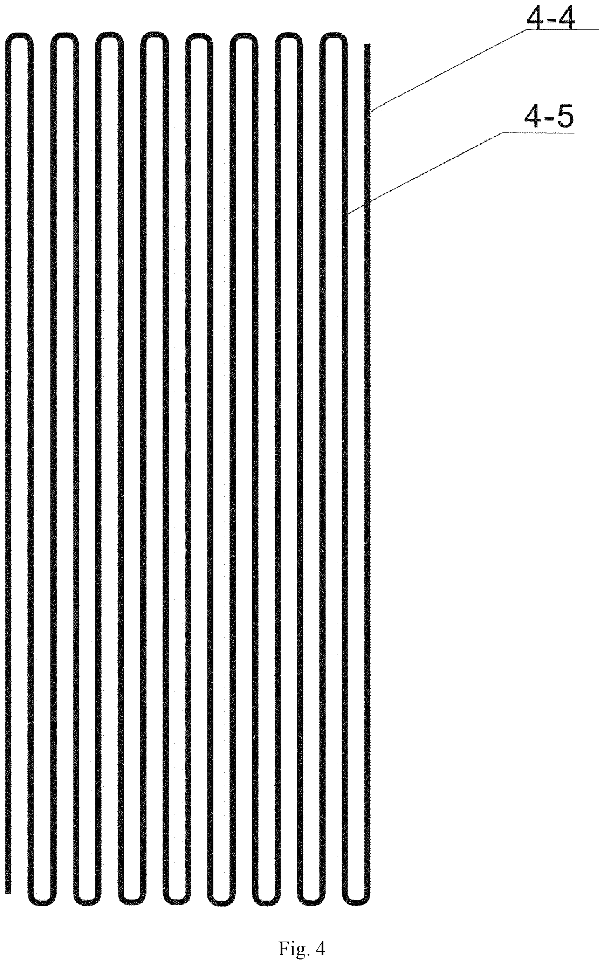

Fig. 4 is a structural view showing of the outer and inner flow guide meshes of the present disclosure.

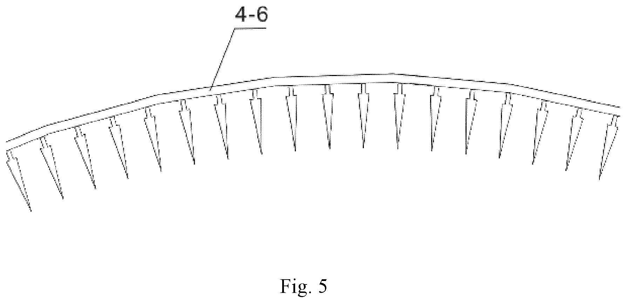

Fig. 5 is a structural view showing of the even folded belt of the present disclosure.

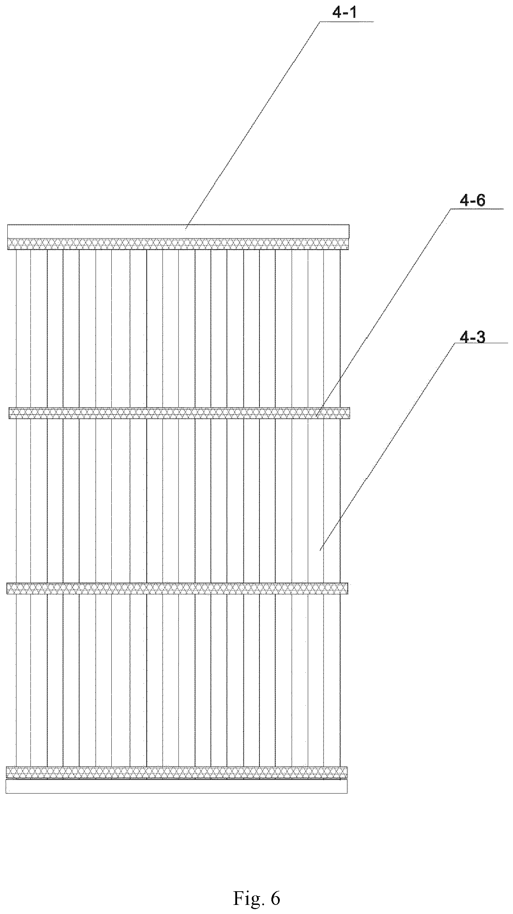

Fig. 6 is an installation diagram of the even folded belt of the present disclosure.

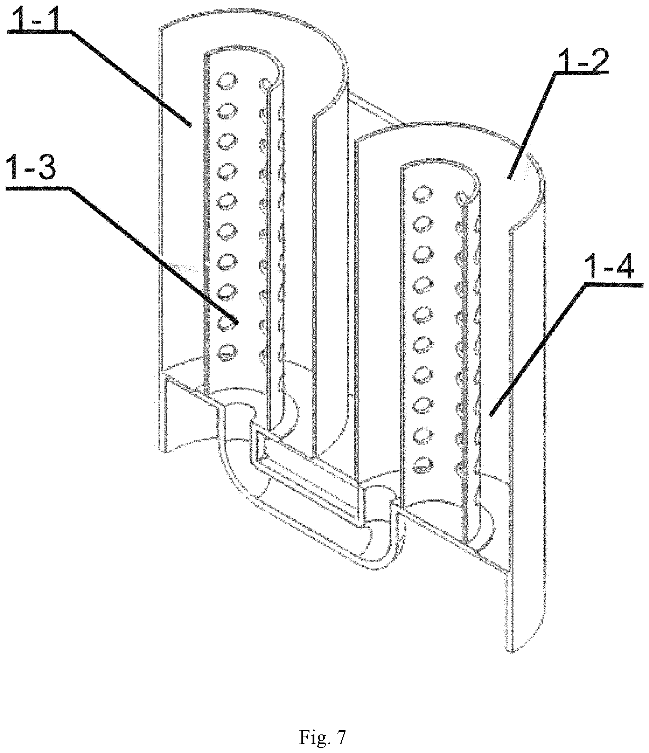

Fig. 7 is a schematic view showing of the primary stage filtering end and the last stage filtering end of the present disclosure.

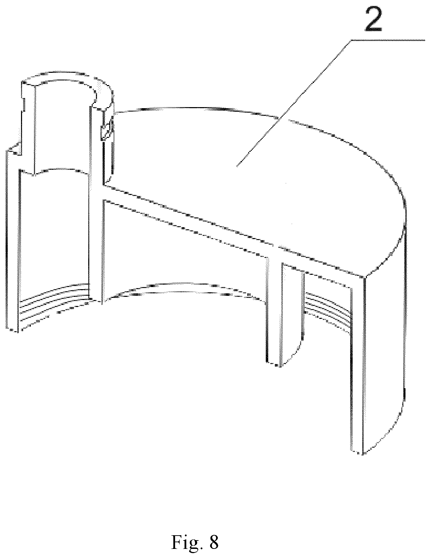

Fig. 8 is a schematic view showing of the water inlet end of the present disclosure.

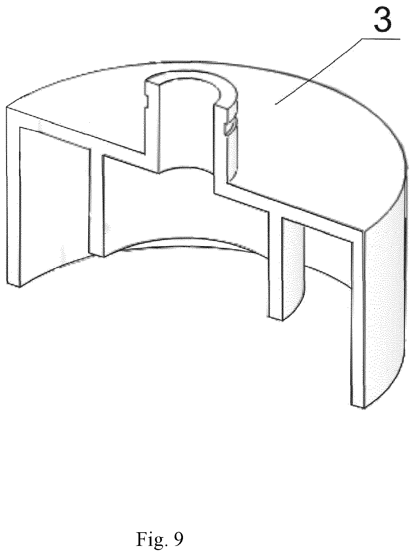

Fig. 9 is a schematic view showing of the water outlet end of the present disclosure.

As shown in the figure, body 1, water inlet end 2, water outlet end 3, folded filter element 4, end cover 4-1, framework 4-2, filter membrane 4-3, outer flow guide mesh 4-4, inner flow guide mesh 4-5, even folded belt 4-6, primary stage filtering end 1-1, last stage filtering end 1-2, inner chamber 1-3, outer chamber 1-4.

### DETAILED DESCRIPTION OF THE EMBODIMENTS

The present disclosure is further described in accordance with the accompanying drawings:

### Embodiment 1

A folded filter element filtration system with an increased effective filtering area is provided by the present disclosure, including a body, an water inlet end, a water outlet end and a folded filter element. The body is provided with two chambers, and an upper side of the body is respectively provided with the water inlet end and the water outlet end. The water inlet end and the water outlet end are respectively installed with a water inlet end cover and a water outlet end cover respectively, and the water inlet end and the water outlet end respectively corresponds to one chamber. The chamber is divided into an inner chamber and an outer chamber, the inner chamber is located at an inner side of the outer chamber, and the folded filter element is respectively installed in the outer chamber. The folded filter element is composed of an end cover, a framework, a filter membrane, an outer flow guide mesh, an inner flow guide mesh and an even folded belt; an outer side of the framework is provided with the filter membrane, the framework is a barrel structure with a gap in the middle, a counter of the filter membrane is a ring-shaped barrel structure with outer teeth and inner teeth, an inner tooth circle of the filter membrane is installed on the outer side of the framework and evenly distributed teeth on the even folded belt areinserted into a clearance of the outer teeth. A barrel outer side of the framework is fitted with the tooth shaped inner side formed by the filter membrane, and two ends of the framework are respectively bonded with the end covers at both ends of the filter element. An outer contour of the filter membrane is evenly fitted with the outer flow guide mesh according to the tooth shape, an inner contour of the filter membrane is evenly fitted with the inner flow guide mesh, and the outer flow guide mesh is fitted with an outer side of the filter membrane and is folded into the tooth shape with the filter membrane. The even folded belt is installed on an outside of the filter membrane, one surface of the even folded belt is in a planar shape, the other surface is in a strip shape with even tooth shape; the surface with even tooth shape is fitted with the outer teeth of the filter membrane, and the even folded belt is in a ring-shaped and is fitted with the end cover. The even folded belt is respectively located at an upper end, a middle end and a lower end of the filter membrane, and the evenly distributed teeth on the even folded belt is fitted with the outer teeth of the filter membrane, so as to ensure the even distribution of the tooth shape of the filter membrane, and avoid deflection of the tooth shape of the filter membrane under water pressure, so as to ensure the even distribution of the tooth shape of the filter membrane. The outer flow guide mesh is fitted with the outer side of the filter membrane, and is folded into the tooth shape with the filter membrane, so as to maintain a stiffness of the filter membrane and ensure that the filter membrane does not deform under water pressure. The water flows into the filter membrane according to the flow guide meshes, and the pressure at each position of the water inlet of the filter membrane is balanced to stabilize flow rate of the filter element. The outer flow guide mesh is composed of a support network line, a flow guide mesh line and a water flow entering area, wherein the support network line and an axis of the filter element form a certain angle configured to support a reverse flow network line, and the flow guide mesh line and the axis of the filter element form a certain angle to fit the support network line. A rectangular area formed by two adjacent flow guide mesh lines is a flow diversion area of the water flow configured for a passage of the water flow, a parallelogram formed by two adjacent flow guide mesh lines and two adjacent support network lines is the water flow entering area configured for a passage of the water flow into the filter membrane. The inner flow guide mesh is fitted with the inner side of the filter membrane and is folded into the tooth shape with the filter membrane. A stiffness of the filter membrane is maintained to ensure that the filter membrane does not deform under water pressure. The water flows into the filter membrane according to the flow guide meshes, and the pressure at each position of the water inlet of the filter membrane is balanced to stabilize flow rate of the filter element. The inner flow guide mesh is composed of a support network line, a flow guide mesh line and a water flow entering area, wherein the support network line and an axis of the filter element form a certain angle to support a reverse flow network line, and the flow guide mesh line and the axis of the filter element form a certain angle to fit the support network line. A rectangular area formed by two adjacent flow guide mesh lines is a flow diversion area of the water flow configured for a passage of the water flow, a parallelogram formed by two adjacent flow guide mesh lines and two adjacent support network lines is the water flow entering area configured for a passage of the water flow into the filter membrane. The end cover is a ring-shaped structure. A center axis of the folded filter element coincides with a center axis of the chamber, and a channel is arranged at a bottom of the body to communicate with the outer chamber and the inner chamber of the two chambers, one end of the channel is connected to a center of one chamber, which is a primary stage filtering end of the filtering system, and one end of the channel is an outlet end from the primary stage filtration to a last stage filtering end, a central axis position of the other end of the channel deviates from the other chamber, the other chamber is the last stage filtering end provided by filtration, and the other end of the channel is the water inlet end of the last stage filtration. A center of the channel is provided with a ring-shaped central pipe with holes, configured for allowing the water flowing after filtering into the filtering system center and circumferential positioning of the filter element. The water inlet end cover is connected to the primary stage filtering end of the body through thread connection. The water inlet end cover is provided with a water inlet, the water inlet is a columnar structure with a central hole, a central axis of the water inlet and a central axis of the end cover are not on the same axis, and a center of the end cover is provided with a ring-shaped convex stop, wherein the ring-shaped convex stop is configured for compressing the filter element after the end cover is connected to the body, which is used for the axial positioning of the filter element. The water outlet end cover is connected to the last stage filtering end of the body through thread connection. The water outlet end cover is provided with a water outlet, the water outlet is a columnar structure with a central hole, a central axis of the water outlet is on the same axis with the center axis of the end cover, and the central hole of the end cover is the water outlet of the filtering system. The center of the water outlet end cover is provided with a ring-shaped convex stop, wherein the convex stop is configured for compressing the filter element after the end cover is connected to the body, which is used for the axial positioning of the filter element.

### Embodiment 2

When the present disclosure is in use, the filtered water enters from the water inlet end, and the filtered water enters into the folded filter element from the water inlet end. The filtered water is filtered through the filter membrane under the flow guiding effect of the outer and inner flow guide meshes. After filtering, the filtered water enters the middle of the chamber, and then the filtered water enters into the folded filter element in another chamber through the channel to be filtered one more time, so as to obtain the purified water, and then the purified water enters into the middle of the chamber to discharge through the water outlet end.

## Claims

1. A folded filter element filtration system with an increased effective filtering area, comprising a body (1), an water inlet end (2), a water outlet end (3) and two filter elements (4), wherein the body (1) is provided with two chambers, an upper side of the body (1) is respectively provided with the water inlet end (2) and the water outlet end (3), the water inlet end (2) and the water outlet end (3) are respectively installed with an water inlet end cover and a water outlet end cover, and the water inlet end (2) and the water outlet end (3) respectively corresponds to one of the two chambers; each of the two chambers is divided into an inner chamber (1-3) and an outer chamber (1-4), the inner chamber (1-3) is located at an inner side of the outer chamber (1-4), and the filter element (4) is respectively installed in the outer chamber (1-4);
**characterized in that** the filter element (4) is folded and that the folded filter element (4) is composed of an end cover (4-1), a framework (4-2), a filter membrane (4-3), an outer flow guide mesh (4-4), an inner flow guide mesh (4-5) and an folded belt (4-6); an outer side of the framework (4-2) is provided with the filter membrane (4-3), the framework (4-2) is a barrel structure with a gap in the middle, the filter membrane (4-3) is a ring-shaped barrel folded structure with outer teeth and inner teeth, an inner tooth circle of the filter membrane (4-3) is installed on the outer side of the framework (4-2), and evenly distributed teeth on the folded belt areinserted into a clearance of the outer teeth, a barrel shaped outer side of the framework (4-2) is fitted with a tooth shaped inner side formed by the filter membrane (4-3), and two ends of the framework (4-2) are respectively bonded with the end covers (4-1) at both ends of the filter element (4), an outer contour of the filter membrane (4-3) is evenly fitted with the outer flow guide mesh (4-4) according to the tooth shape, an inner contour of the filter membrane (4-3) is evenly fitted with the inner flow guide mesh (4-5), and the outer flow guide mesh (4-4) is fitted with an outer side of the filter membrane (4-3) and is folded into the tooth shape with the filter membrane (4-3); the folded belt (4-6) is installed on an outside of the filter membrane (4-3), one surface of the folded belt (4-6) is in a planar shape, the other surface is in a strip shape with even tooth shape; the surface with even tooth shape is fitted with the outer teeth of the filter membrane (4-3), and the folded belt (4-6) is in a ring-shaped and is fitted with the end cover (4-1);
wherein the outer flow guide mesh (4-4) is fitted with the outer side of the filter membrane (4-3), and is folded into the tooth shape with the filter membrane (4-3), so as to maintain a stiffness of the filter membrane (4-3) and ensure that the filter membrane (4-3) does not deform under water pressure; water flows into the filter membrane (4-3) according to the flow guide meshes (4-4, 4-5); pressure at each position of the water inlet of the filter membrane (4-3) is balanced to stabilize flow rate of the filter element (4); the outer flow guide mesh (4-4) is composed of a support network line, a flow guide mesh line and a water flow entering area, wherein the support network line and an axis of the filter element (4) form a certain angle configured to support a reverse flow network line; the flow guide mesh line and the axis of the filter element (4) form a certain angle to fit the support network line; a rectangular area formed by two adjacent flow guide mesh lines is a flow diversion area of the water flow configured for a passage of the water flow, a parallelogram formed by two adjacent flow guide mesh lines and two adjacent support network lines is the water flow entering area configured for a passage of the water flow into the filter membrane (4-3); and
wherein the inner flow guide mesh (4-5) is fitted with the inner side of the filter membrane (4-3) and is folded into the tooth shape with the filter membrane (4-3); a stiffness of the filter membrane (4-3) is maintained to ensure that the filter membrane (4-3) does not deform under water pressure; water flows into the filter membrane (4-3) according to the flow guide meshes (4-4, 4-5); pressure at each position of the water inlet of the filter membrane (4-3) is balanced to stabilize flow rate of the filter element (4); the inner flow guide mesh (4-5) is composed of a support network line, a flow guide mesh line and a water flow entering area, wherein the support network line and an axis of the filter element (4) form a certain angle to support a reverse flow network line; the flow guide mesh line and the axis of the filter element (4) form a certain angle to fit the support network line; a rectangular area formed by two adjacent flow guide mesh lines is a flow diversion area of the water flow configured for a passage of the water flow, a parallelogram formed by two adjacent flow guide mesh lines and two adjacent support network lines is the water flow entering area configured for a passage of the water flow into the filter membrane (4-3).

2. The folded filter element filtration system with the increased effective filtering area according to claim 1, wherein the folded belt (4-6) is respectively located at an upper end, a middle end and a lower end of the filter membrane (4-3), and the evenly distributed teeth on the folded belt (4-6) is fitted with the outer teeth of the filter membrane (4-3), so as to ensure the even distribution of the tooth shape of the filter membrane (4-3), and avoid deflection of the tooth shape of the filter membrane (4-3) under water pressure.

3. The folded filter element filtration system with increased effective filtering area according to claim 1, wherein the end cover (4-1) is a ring-shaped structure.

4. The folded filter element filtration system with increased effective filtering area according to claim 1, wherein a center axis of the folded filter element (4) coincides with a center axis of the chamber, a channel is arranged at a bottom of the body (1) to communicate with the outer chamber (1-4) and the inner chamber (1-3) of the two chambers, one end of the channel is connected to a center of one chamber, which is a primary stage filtering end (1-1) of the filtering system, and one end of the channel is an outlet end from the primary stage filtration to a last stage filtering end (1-2), a central axis position of the other end of the channel deviates from the other chamber, the other chamber is the last stage filtering end (1-2) provided by filtration, and the other end of the channel is the water inlet end of the last stage filtering end (1-2); a center of the channel is provided with a ring-shaped central pipe with holes, configured for allowing the water flowing after filtering into the filtering system center and circumferential positioning of the filter element (4).

5. The folded filter element filtration system with increased effective filtering area according to claim 1, wherein the water inlet end cover is connected to the primary stage filtering end (1-1) of the body (1) through thread connection, the water inlet end cover is provided with a water inlet, the water inlet is a columnar structure with a central hole, a central axis of the water inlet and a central axis of the end cover (4-1) are not on the same axis, and a center of the end cover (4-1) is provided with a ring-shaped convex stop, wherein the ring-shaped convex stop is configured for compressing the filter element (4) after the end cover (4-1) is connected to the body (1), which is used for the axial positioning of the filter element (4); the water outlet end cover is connected to the last stage filtering end (1-2) of the body (1) through thread connection, the water outlet end cover is provided with a water outlet, the water outlet is a columnar structure with a central hole, a central axis of the water outlet is on the same axis with the center axis of the end cover (4-1), and the central hole of the end cover (4-1) is the water outlet of the filtering system; the center of the water outlet end cover is provided with a ring-shaped convex stop, configured for compressing the filter element (4) after the end cover (4-1) is connected to the body (1), which is used for the axial positioning of the filter element (4).

## Patentansprüche

1. - Faltfilterelement-Filtrationssystem mit vergrößerter effektiver Filterungsfläche, umfassend einen Körper (1), ein Wassereinlassende (2), ein Wasserauslassende (3) und zwei Filterelemente (4) umfasst, wobei der Körper (1) mit zwei Kammern versehen ist, eine Oberseite des Körpers (1) jeweils mit dem Wassereinlassende (2) und dem Wasserauslassende (3) versehen ist, das Wassereinlassende (2) und das Wasserauslassende (3) jeweils mit einer Wassereinlassendabdeckung und einer Wasserauslassendabdeckung versehen sind, und das Wassereinlassende (2) und das Wasserauslassende (3) jeweils einer der zwei Kammern entsprechen; jede der beiden Kammern in eine innere Kammer (1-3) und eine äußere Kammer (1-4) unterteilt ist, wobei die innere Kammer (1-3) an einer Innenseite der äußeren Kammer (1-4) angeordnet ist, und das Filterelement (4) jeweils in der äußeren Kammer (1-4) installiert ist;
**dadurch gekennzeichnet, dass** das Filterelement (4) gefaltet ist und dass das gefaltete Filterelement (4) aus einer Endabdeckung (4-1), einem Rahmen (4-2), einer Filtermembran (4-3), einem äußeren Strömungsleitgewebe (4-4), einem inneren Strömungsleitgewebe (4-5) und einem gefalteten Band (4-6) besteht; eine Außenseite des Rahmens (4-2) mit der Filtermembran (4-3) versehen ist, der Rahmen (4-2) eine Zylinderstruktur mit einer Lücke in der Mitte ist, die Filtermembran (4-3) eine gefaltete ringförmige Zylinderstruktur mit äußeren Zähnen und inneren Zähnen ist, ein innerer Zahnkreis der Filtermembran (4-3) auf der Außenseite des Rahmens (4-2) installiert ist, und gleichförmig verteilte Zähnen auf dem gefalteten Band in einen Freiraum der äußeren Zähne eingefügt sind, eine zylinderförmige Außenseite des Rahmens (4-2) an einer zahnförmigen Innenseite angepasst ist, die von der Filtermembran (4-3) gebildet ist, und zwei Enden des Rahmens (4-2) jeweils mit den Endabdeckungen (4-1) an beiden Enden des Filterelements (4) verbunden sind, eine äußere Kontur der Filtermembran (4-3) gleichförmig an dem äußeren Strömungsleitgewebe (4-4) gemäß der Zahnform angepasst ist, eine innere Kontur der Filtermembran (4-3) gleichförmig an dem inneren Strömungsleitgewebe (4-5) angepasst ist, und das äußere Strömungsleitgewebe (4-4) an einer Außenseite der Filtermembran (4-3) angepasst und mit der Filtermembran (4-3) in die Zahnform gefaltet ist; das gefaltete Band (4-6) an einer Außenseite der Filtermembran (4-3) installiert ist, eine Oberfläche des gefalteten Bands (4-6) in einer ebenen Form ist, die andere Oberfläche in einer Streifenform mit gleichförmiger Zahnform ist; die Oberfläche mit gleichförmiger Zahnform an den äußeren Zähnen der Filtermembran (4-3) angepasst ist, und das gefaltete Band (4-6) ringförmig und an der Endabdeckung (4-1) angepasst ist;
wobei das äußere Strömungsleitgewebe (4-4) an der Außenseite der Filtermembran (4-3) angepasst ist und mit der Filtermembran (4-3) in die Zahnform gefaltet ist, um eine Steifigkeit der Filtermembran (4-3) beizubehalten und sicherzustellen, dass sich die Filtermembran (4-3) unter Wasserdruck nicht verformt; Wasser gemäß den Strömungsleitgeweben (4-4, 4-5) in die Filtermembran (4-3) strömt; der Druck an jeder Position des Wassereinlasses der Filtermembran (4-3) ausgeglichen wird, um eine Durchflussmenge des Filterelements (4) zu stabilisieren; das äußere Strömungsleitgewebe (4-4) aus einer Stütznetzwerklinie, einer Strömungsleitgewebelinie und einem Wasserstromeintrittsbereich besteht, wobei die Stütznetzwerklinie und eine Achse des Filterelements (4) einen gewissen Winkel bilden, der konfiguriert ist, um eine Rückstromnetzwerklinie zu stützen; die Strömungsleitgewebelinie und die Achse des Filterelements (4) einen gewissen Winkel bilden, um sich an die Stütznetzwerklinie anzupassen; ein rechteckiger Bereich, der durch zwei benachbarte Strömungsleitgewebelinien gebildet ist, ein Strömungsumleitungsbereich des Wasserstroms ist, der für einen Durchgang des Wasserstroms konfiguriert ist, ein Parallelogramm, das durch zwei benachbarte Strömungsleitgewebelinien und zwei benachbarte Stütznetzwerklinien gebildet ist, der Wasserstromeintrittsbereich ist, der für einen Durchgang des Wasserstroms in die Filtermembran (4-3) konfiguriert ist; und
wobei das innere Strömungsleitgewebe (4-5) an der Innenseite der Filtermembran (4-3) angepasst ist und mit der Filtermembran (4-3) in die Zahnform gefaltet wird; eine Steifigkeit der Filtermembran (4-3) beibehalten wird, um sicherzustellen, dass sich die Filtermembran (4-3) unter Wasserdruck nicht verformt; Wasser gemäß den Strömungsleitgeweben (4-4, 4-5) in die Filtermembran (4-3) strömt; der Druck an jeder Position des Wassereinlasses der Filtermembran (4-3) ausgeglichen wird, um eine Durchflussmenge des Filterelements (4) zu stabilisieren; das innere Strömungsleitgewebe (4-5) aus einer Stütznetzwerklinie, einer Strömungsleitgewebelinie und einem Wasserstromeintrittsbereich besteht, wobei die Stütznetzwerklinie und eine Achse des Filterelements (4) einen gewissen Winkel bilden, der ist, um eine Rückstromnetzwerklinie zu stützen; die Strömungsleitgewebelinie und die Achse des Filterelements (4) einen gewissen Winkel bilden, um sich an die Stütznetzwerklinie anzupassen; ein rechteckiger Bereich, der durch zwei benachbarte Strömungsleitgewebelinien gebildet ist, ist ein Strömungsumlenkbereich des Wasserstroms, der für einen Durchgang des Wasserstroms konfiguriert ist, ein Parallelogramm, das durch zwei benachbarte Strömungsleitgewebelinien und zwei benachbarte Stütznetzlinien gebildet ist, ist der Wasserstromeintrittsbereich, der für einen Durchgang des Wasserstroms in die Filtermembran (4-3) konfiguriert ist.

2. - Faltfilterelement-Filtrationssystem mit vergrößerter effektiver Filterungsfläche nach Anspruch 1, wobei sich das gefaltete Band (4-6) jeweils an einem oberen Ende, einem mittleren Ende und einem unteren Ende der Filtermembran (4-3) befindet, und die gleichförmig verteilten Zähne auf dem gefalteten Band (4-6) an den äußeren Zähnen der Filtermembran (4-3) angepasst sind, um die gleichförmige Verteilung der Zahnform der Filtermembran (4-3) zu gewährleisten und eine Durchbiegung der Zahnform der Filtermembran (4-3) unter Wasserdruck zu vermeiden.

3. - Faltfilterelement-Filtrationssystem mit vergrößerter effektiver Filterungsfläche nach Anspruch 1, wobei die Endabdeckung (4-1) eine ringförmige Struktur ist.

4. - Faltfilterelement-Filtrationssystem mit vergrößerter effektiver Filterungsfläche nach Anspruch 1, wobei eine Mittelachse des gefalteten Filterelements (4) mit einer Mittelachse der Kammer zusammenfällt, an einem Boden des Körpers (1) ein Kanal angeordnet ist, um mit der äußeren Kammer (1-4) und der inneren Kammer (1-3) der zwei Kammern in Verbindung zu sein, ein Ende des Kanals mit einer Mitte einer Kammer verbunden ist, die ein primäres Filterungsstufenende (1-1) des Filterungssystems ist, und ein Ende des Kanals ein Auslassende von der primären Filterungsstufe zu einem letzten Filterungsstufenende (1-2) ist, eine Mittelachsenposition des anderen Endes des Kanals von der anderen Kammer abweicht, die andere Kammer das letzte Filterungsstufenende (1-2) ist, das durch Filtration bereitgestellt ist, und das andere Ende des Kanals das Wassereinlassende des letzten Filterungsstufenendes (1-2) ist; eine Mitte des Kanals mit einem ringförmigen mittleren Rohr mit Löchern versehen ist, das konfiguriert ist, um zu ermöglichen, dass das Wasser nach Filtern in die Filterungssystemmitte strömt und das Filterelement (4) in Umfangsrichtung positioniert wird.

5. - Faltfilterelement-Filtrationssystem mit vergrößerter effektiver Filterungsfläche nach Anspruch 1, wobei die Wassereinlassendabdeckung durch eine Gewindeverbindung mit dem primären Filterungsstufenende (1-1) des Körpers (1) verbunden ist, die Wassereinlassendabdeckung mit einem Wassereinlass versehen ist, der Wassereinlass eine säulenförmige Struktur mit einem mittleren Loch ist, eine Mittelachse des Wassereinlasses und eine Mittelachse der Endabdeckung (4-1) nicht auf der gleichen Achse sind, und eine Mitte der Endabdeckung (4-1) mit einem ringförmigen konvexen Anschlag versehen ist, wobei der ringförmige konvexe Anschlag zum Zusammendrücken des Filterelements (4) konfiguriert ist, nachdem die Endabdeckung (4-1) mit dem Körper (1) verbunden ist, was für das axiale Positionieren des Filterelements (4) verwendet wird; die Wasserauslassendabdeckung durch eine Gewindeverbindung mit dem letzten Filterungsstufenende (1-2) des Körper (1) verbunden ist, die Wasserauslassendabdeckung mit einem Wasserauslass versehen ist, der Wasserauslass eine säulenförmige Struktur mit einem mittleren Loch ist, eine Mittelachse des Wasserauslasses auf derselben Achse ist wie die Mittelachse der Endabdeckung (4-1), und das mittlere Loch der Endabdeckung (4-1) der Wasserauslass des Filterungssystems ist; die Mitte der Wasserauslassendabdeckung mit einem ringförmigen konvexen Anschlag versehen ist, der zum Zusammendrücken des Filterelements (4) konfiguriert ist, nachdem die Endabdeckung (4-1) mit dem Körper (1) verbunden ist, was für das axiale Positionieren des Filterelements (4) verwendet wird.

## Revendications

1. - Système de filtration à éléments filtrants pliés ayant une surface de filtration efficace accrue, comprenant un corps (1), une extrémité d'entrée d'eau (2), une extrémité de sortie d'eau (3) et deux éléments filtrants (4), le corps (1) comportant deux chambres, un côté supérieur du corps (1) comportant respectivement l'extrémité d'entrée d'eau (2) et l'extrémité de sortie d'eau (3), l'extrémité d'entrée d'eau (2) et l'extrémité de sortie d'eau (3) étant respectivement munies d'un couvercle d'extrémité d'entrée d'eau et d'un couvercle d'extrémité de sortie d'eau, et l'extrémité d'entrée d'eau (2) et l'extrémité de sortie d'eau (3) correspondant respectivement à l'une des deux chambres ; chacune des deux chambres étant divisée en une chambre intérieure (1-3) et une chambre extérieure (1-4), la chambre intérieure (1-3) étant située sur un côté intérieur de la chambre extérieure (1-4), et l'élément filtrant (4) étant respectivement installé dans la chambre extérieure (1-4) ;
**caractérisé par le fait que** l'élément filtrant (4) est plié et l'élément filtrant plié (4) est composé d'un couvercle d'extrémité (4-1), d'un châssis (4-2), d'une membrane filtrante (4-3), d'une maille extérieure de guidage d'écoulement (4-4), d'une maille intérieure de guidage d'écoulement (4-5) et d'une ceinture pliée (4-6) ; un côté extérieur du châssis (4-2) est muni de la membrane filtrante (4-3), le châssis (4-2) est une structure en tube avec un intervalle au milieu, la membrane filtrante (4-3) est une structure pliée en tube en forme d'anneau avec des dents extérieures et des dents intérieures, un cercle de dents intérieures de la membrane filtrante (4-3) est installé sur le côté extérieur du châssis (4-2), et des dents uniformément réparties sur la ceinture pliée sont introduites dans un espace libre des dents extérieures, un côté extérieur en forme de tube du châssis (4-2) est ajusté à un côté intérieur en forme de dents formé par la membrane filtrante (4-3), et deux extrémités du châssis (4-2) sont respectivement collées aux couvercles d'extrémité (4-1) aux deux extrémités de l'élément filtrant (4), un contour extérieur de la membrane filtrante (4-3) est ajusté de manière uniforme à la maille extérieure de guidage d'écoulement (4-4) conformément à la forme de dents, un contour intérieur de la membrane filtrante (4-3) est ajusté de manière uniforme à la maille intérieure de guidage d'écoulement (4-5), et la maille extérieure de guidage d'écoulement (4-4) est ajustée à un côté extérieur de la membrane filtrante (4-3) et est pliée en forme de dents avec la membrane filtrante (4-3) ; la ceinture pliée (4-6) est installée sur un extérieur de la membrane filtrante (4-3), une surface de la ceinture pliée (4-6) est de forme plane, l'autre surface est en forme de bande avec une forme régulière de dents ; la surface avec une forme régulière de dents est ajustée aux dents extérieures de la membrane filtrante (4-3), et la ceinture pliée (4-6) est en forme d'anneau et est ajustée au couvercle d'extrémité (4-1) ;
dans lequel la maille extérieure de guidage d'écoulement (4-4) est ajustée au côté extérieur de la membrane filtrante (4-3) et est pliée en forme de dents avec la membrane filtrante (4-3), de façon à maintenir une rigidité de la membrane filtrante (4-3) et à garantir que la membrane filtrante (4-3) ne se déforme pas sous l'effet d'une pression d'eau ; de l'eau s'écoule dans la membrane filtrante (4-3) selon les mailles de guidage d'écoulement (4-4, 4-5) ; une pression à chaque position de l'entrée d'eau de la membrane filtrante (4-3) est équilibrée pour stabiliser un débit de l'élément filtrant (4) ; la maille extérieure de guidage d'écoulement (4-4) est composée d'une ligne de réseau de support, d'une ligne de maille de guidage d'écoulement et d'une zone d'entrée d'écoulement d'eau, la ligne de réseau de support et un axe de l'élément filtrant (4) formant un certain angle configuré pour supporter une ligne de réseau d'écoulement inversé ; la ligne de maille de guidage d'écoulement et l'axe de l'élément filtrant (4) forment un certain angle pour s'ajuster à la ligne de réseau de support ; une zone rectangulaire formée par deux lignes adjacentes de maille de guidage d'écoulement est une zone de déviation d'écoulement de l'écoulement d'eau configurée pour un passage de l'écoulement d'eau, un parallélogramme formé par deux lignes adjacentes de maille de guidage d'écoulement et deux lignes adjacentes de réseau de support est la zone d'entrée d'écoulement d'eau configurée pour un passage de l'écoulement d'eau dans la membrane filtrante (4-3) ; et
dans lequel la maille intérieure de guidage d'écoulement (4-5) est ajustée au côté intérieur de la membrane filtrante (4-3) et est pliée en forme de dents avec la membrane filtrante (4-3) ; une rigidité de la membrane filtrante (4-3) est maintenue pour garantir que la membrane filtrante (4-3) ne se déforme pas sous l'effet d'une pression d'eau ; de l'eau s'écoule dans la membrane filtrante (4-3) selon les mailles de guidage d'écoulement (4-4, 4-5) ; une pression à chaque position de l'entrée d'eau de la membrane filtrante (4-3) est équilibrée pour stabiliser un débit de l'élément filtrant (4) ; la maille intérieure de guidage d'écoulement (4-5) est composée d'une ligne de réseau de support, d'une ligne de maille de guidage d'écoulement et d'une zone d'entrée d'écoulement d'eau, la ligne de réseau de support et un axe de l'élément filtrant (4) formant un certain angle pour supporter une ligne de réseau d'écoulement inversé ; la ligne de maille de guidage d'écoulement et l'axe de l'élément filtrant (4) forment un certain angle pour s'ajuster à la ligne de réseau de support ; une zone rectangulaire formée par deux lignes adjacentes de maille de guidage d'écoulement est une zone de déviation d'écoulement de l'écoulement d'eau configurée pour un passage de l'écoulement d'eau, un parallélogramme formé par deux lignes adjacentes de maille de guidage d'écoulement et deux lignes adjacentes de réseau de support est la zone d'entrée d'écoulement d'eau configurée pour un passage de l'écoulement d'eau dans la membrane filtrante (4-3).

2. - Système de filtration à éléments filtrants pliés ayant une surface de filtration efficace accrue selon la revendication 1, dans lequel la ceinture pliée (4-6) est respectivement située à une extrémité supérieure, une extrémité centrale et une extrémité inférieure de la membrane filtrante (4-3), et les dents réparties uniformément sur la ceinture pliée (4-6) sont ajustées aux dents extérieures de la membrane filtrante (4-3), de façon à assurer la répartition uniforme de la forme de dents de la membrane filtrante (4-3) et à éviter une déformation de la forme de dents de la membrane filtrante (4-3) sous l'effet d'une pression d'eau.

3. - Système de filtration à éléments filtrants pliés ayant une surface de filtration efficace accrue selon la revendication 1, dans lequel le couvercle d'extrémité (4-1) est une structure en forme d'anneau.

4. - Système de filtration à éléments filtrants pliés ayant une surface de filtration efficace accrue selon la revendication 1, dans lequel un axe central de l'élément filtrant plié (4) coïncide avec un axe central de la chambre, un canal est prévu à la partie inférieure du corps (1) pour communiquer avec la chambre extérieure (1-4) et la chambre intérieure (1-3) des deux chambres, une extrémité du canal est reliée à un centre d'une chambre, qui est une extrémité de filtration d'étage primaire (1-1) du système de filtration, et une extrémité du canal est une extrémité de sortie de l'extrémité de filtration d'étage primaire vers une extrémité de filtration de dernier étage (1-2), une position d'axe central de l'autre extrémité du canal s'écarte de l'autre chambre, l'autre chambre est l'extrémité de filtration de dernier étage (1-2) fournie par la filtration, et l'autre extrémité du canal est l'extrémité d'entrée d'eau de l'extrémité de filtration de dernier étage (1-2) ; un centre du canal comporte un tuyau central en forme d'anneau avec des trous, configuré pour permettre à l'eau de s'écouler après filtration dans le centre de système de filtration et un positionnement circonférentiel de l'élément filtrant (4).

5. - Système de filtration à éléments filtrants pliés ayant une surface de filtration efficace accrue selon la revendication 1, dans lequel le couvercle d'extrémité d'entrée d'eau est relié à l'extrémité de filtration d'étage primaire (1-1) du corps (1) par liaison par vissage, le couvercle d'extrémité d'entrée d'eau comporte une entrée d'eau, l'entrée d'eau est une structure en colonne avec un trou central, un axe central de l'entrée d'eau et un axe central du couvercle d'extrémité (4-1) ne sont pas sur le même axe, et un centre du couvercle d'extrémité (4-1) comporte une butée convexe en forme d'anneau, la butée convexe en forme d'anneau étant configurée pour comprimer l'élément filtrant (4) après que le couvercle d'extrémité (4-1) est relié au corps (1), ce qui est utilisé pour le positionnement axial de l'élément filtrant (4) ; le couvercle d'extrémité de sortie d'eau est relié à l'extrémité de filtration de dernier étage (1-2) du corps (1) par liaison par vissage, le couvercle d'extrémité de sortie d'eau comporte une sortie d'eau, la sortie d'eau est une structure en colonne avec un trou central, un axe central de la sortie d'eau est sur le même axe que l'axe central du couvercle d'extrémité (4-1), et le trou central du couvercle d'extrémité (4-1) est la sortie d'eau du système de filtration ; le centre du couvercle d'extrémité de sortie d'eau comporte une butée convexe en forme d'anneau, configurée pour comprimer l'élément filtrant (4) après que le couvercle d'extrémité (4-1) est relié au corps (1), ce qui est utilisé pour le positionnement axial de l'élément filtrant (4).
